# EUROPEAN PATENT SPECIFICATION

(11) **EP 4 598 242 B1**
(45) Date of publication and mention of the grant of the patent: **21.10.2026**
(21) Application number: 22959747.1
(22) Date of filing: 26.09.2022
(51) Int. Cl.: H04L 1/1829, H04L 1/1867, H04W 74/08

(54) **INDICATION METHOD AND APPARATUS, DEVICE AND STORAGE MEDIUM**
ANZEIGEVERFAHREN UND -VORRICHTUNG, VORRICHTUNG UND SPEICHERMEDIUM
PROCÉDÉ ET APPAREIL D'INDICATION, DISPOSITIF, ET SUPPORT DE STOCKAGE

(43) Date of publication of application: 06.08.2025
(73) Proprietor: Beijing Xiaomi Mobile Software Co., Ltd., Beijing 100085 (CN)
(72) Inventor: LIU, Min, Beijing 100085 (CN)
(74) Representative: Stöckeler, Ferdinand
(86) International application number: PCT/CN2022/121405
(87) International publication number: WO 2024/065095

(56) References cited:
- EP-A1- 3 799 505
- WO-A1-2021/257951
- CN-A- 104 852 787
- CN-A- 112 514 499
- CN-A- 114 175 841
- CN-A- 114 363 986
- NTT DOCOMO, INC.: "Discussion on ack-NACK-NumRepetitions configuration", 3GPP DRAFT; R2-1818384, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Spokane, USA; 20181112 - 20181116, 12 November 2018 (2018-11-12), Mobile Competence Centre ; 650, route des Lucioles ; F-06921 Sophia-Antipolis Cedex ; France , XP051557879

## Description

### TECHNICAL FIELD

The present disclosure generally relates to the field of communication technologies, and more particularly relates to an indication method, an indication apparatus, an indication device and a storage medium.

### BACKGROUND

In non-terrestrial networks, the large distance between satellites/aerial devices and the ground leads to insufficient network coverage. A hybrid automatic repeat request acknowledgement (HARQ-ACK) feedback for a random access message, for example, message 4 (Message.4, Msg.4) or message B (Message.B, Msg. B) in a random access procedure, means that during the random access procedure, after a base station receives and parses a terminal identifier contained in message 3 (Message.3, Msg.3), it transmits message 4 (Message.4, Msg.4) on a physical downlink shared channel (PDSCH). Msg.4 may also be called a contention resolution message. The existing Msg.4 is scheduled by downlink control information (DCI) format 1_0 scrambled by a temporary cell radio network temporary identity (TC-RNTI). The DCI currently includes the following fields: identifiers for DCI formats, a frequency domain resource assignment field, a time domain resource assignment field, etc. The information storage capacities contained in individual fields may be different. After the contention resolution is successful, the random access procedure is completed. If the terminal successfully decodes Msg.4, it will transmit a hybrid automatic repeat request (HARQ) feedback to the network device. The feedback may be called an HARQ-ACK message. If Msg.4 is not decoded correctly, no HARQ-ACK message is fed back.

In the related art, for the HARQ-ACK feedback for the random access message, the coverage requirement cannot be met, which affects the effect of the HARQ-ACK feedback.
WO 2021/257951 A1 discloses that a wireless device receives a message B including a RA response that indicates a first number of times to repeat transmission of a hybrid acknowledgement repeat request (HARQ) feedback corresponding to the message B.
EP 3799505 A1 discloses that a transmitting device includes a transmitting section configured to transmit a signal in a random access procedure, and a control section configured to control repetitions for a message including one of data using data mapping type B and a HARQ (Hybrid Automatic Repeat reQuest) feedback.
NTT DOCOMO, INC.: "Discussion on ack-NACK-NumRepetitions configuration", 3GPP Draft, R2-1818384, 3rd Generation Partnership Project (3GPP), provides the agreements that a parameter for the number of HARQ Ack/Nack repetitions is provided by SIB2-NB (ack-NACK-NumRepetitions-Msg4) for Msg4 transmission and by MSG4 (ack-NACK-NumRepetitions in RRCConnectionSetup-NB, RRCConnectionResume-NB, or RRCConnectionReestablishment-NB) for further transmission.

### SUMMARY

Embodiments of the present disclosure provide an indication method, an indication apparatus, an indication device, a chip system, a storage medium, a computer program and a computer program product, which may be applied in the field of communication technologies and may accurately indicate the number of repetitions for a hybrid automatic repeat request acknowledgement message based on first indication information, thereby effectively improving the coverage capability and feedback effect of the hybrid automatic repeat request acknowledgement message.

In a first aspect, embodiments of the present disclosure provide an indication method according to appended independent claim 1.

In a second aspect, embodiments of the present disclosure provide another indication method according to appended independent claim 7.

In a third aspect, embodiments of the present disclosure provide a communication device according to appended independent claim 12.

In a fourth aspect, embodiments of the present disclosure provide another communication device according to appended independent claim 13.

In an eleventh aspect, embodiments of the present disclosure provide a communication system according to appended independent claim 14.

In a twelfth aspect, embodiments of the present disclosure provide a computer-readable storage medium for storing instructions used by the above-mentioned terminal, and when the instructions are executed, the terminal performs the indication method described above in the first aspect.

In summary, the indication method, the indication apparatus, the indication device, the chip system, the storage medium, the computer program and the computer program product provided in the embodiments of the present disclosure may achieve the following technical effects.

By receiving the first indication information transmitted by the network device and transmitting the hybrid automatic repeat request acknowledgement message corresponding to the random access message according to the first indication information, in which the first indication information indicates the number of repetitions for the hybrid automatic repeat request acknowledgement message, it is possible to accurately indicate the number of repetitions for the hybrid automatic repeat request acknowledgement message based on the first indication information, thereby effectively improving the coverage capability and feedback effect of the hybrid automatic repeat request acknowledgement message.

### BRIEF DESCRIPTION OF THE DRAWINGS

In order to more clearly illustrate the technical solutions in the embodiments of the present disclosure or the background, the drawings used in the embodiments of the present disclosure or the background will be described below.
FIG. 1 is a schematic diagram of an architecture of a communication system provided in an embodiment of the present disclosure.
FIG. 2 is a schematic flowchart of an indication method provided in an embodiment of the present disclosure.
FIG. 3 is a schematic flowchart of another indication method provided in an embodiment of the present disclosure.
FIG. 4 is a schematic flowchart of another indication method provided in an embodiment of the present disclosure.
FIG. 5 is a schematic flowchart of another indication method provided in an embodiment of the present disclosure.
FIG. 6 is a schematic flowchart of another indication method provided in an embodiment of the present disclosure.
FIG. 7 is a schematic flowchart of another indication method provided in an embodiment of the present disclosure.
FIG. 8 is a schematic flowchart of another indication method provided in an embodiment of the present disclosure.
FIG. 9 is a schematic block diagram of a communication device provided in an embodiment of the present disclosure.
FIG. 10 is a schematic block diagram of another communication device provided in an embodiment of the present disclosure.
FIG. 11 is a schematic block diagram of a chip provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the embodiments of the present disclosure. Instead, they are merely examples of apparatuses and methods consistent with aspects related to the embodiments of the present disclosure as recited in the appended claims.

Terms used herein in embodiments of the present disclosure are only for the purpose of describing specific embodiments, but should not be construed to limit embodiments of the present disclosure. As used in the embodiments of the present disclosure and the appended claims, "a/an", and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly the second information may also be referred to as the first information, without departing from the scope of embodiments of the present disclosure. As used herein, the term "if" or "in case that" may be construed to mean "when" or "upon" or "in response to determining" depending on the context.

For the ease of understandings, the terms involved in the present disclosure are first introduced.

### 1. Non-terrestrial network (NTN)

The non-terrestrial network refers to a technology that uses typical satellites and high-altitude platform systems (HAPSs) to participate in network deployment. Compared with traditional terrestrial networks, non-terrestrial networks are suitable for situations where base stations cannot be built or are damaged, such as continuous coverage in remote mountainous areas, deserts, oceans, and forests, or emergency communications when disasters occur and base stations are damaged. Typical NTN scenarios may be summarized as all-terrain coverage, signaling diversion, emergency communications, Internet of Things and broadcasting services.

### 2. Random access

The random access refers to a procedure from a moment when a user equipment (UE) transmits a random access preamble to try to access a network to a moment when a basic signaling connection is established with the network. The random access is a very important step in a mobile communication system and is also the last step in establishing a communication link between a terminal and a base station. The random access is divided into a competitive random access and a non-competitive random access.

### 3. Radio resource control (RRC)

Radio resource control, also known as radio resource management (RRM) or radio resource allocation (RRA), refers to the management, control and scheduling of radio resources through certain strategies and means, which may make full use of limited radio network resources as much as possible, ensure that the planned coverage area is reached, and maximize service capacities and resource utilization rates, while meeting the quality of service requirements.

### 4. Downlink control information (DCI)

Downlink control information refers to downlink control information transmitted by an evolved node B (eNB) to the UE and carried on a downlink physical control channel (PDCCH), including uplink and downlink resource allocation, HARQ information, power control, etc.

In order to better understand an indication method in an embodiment of the present disclosure, a communication system to which the embodiments of the present disclosure is applicable is first described below.

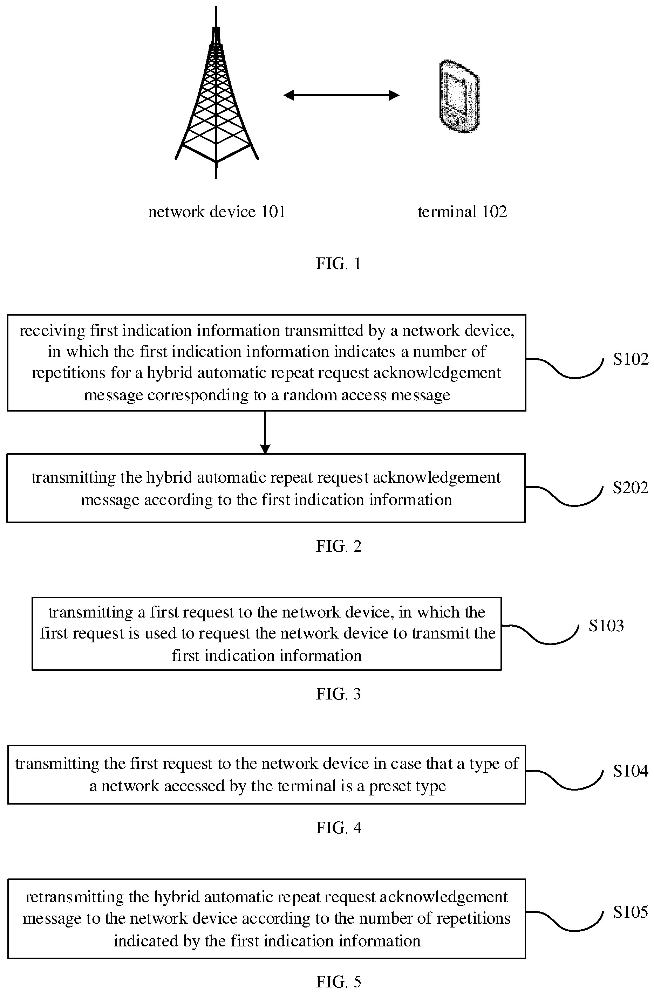

FIG. 1 is a schematic diagram of the architecture of a communication system provided in an embodiment of the present disclosure. The communication system may include, but is not limited to, one network device and one terminal. The number and form of devices shown in FIG. 1 are only used as examples and do not constitute a limitation on the embodiments of the present disclosure. In actual applications, two or more network devices and two or more terminals may be included. The communication system shown in FIG. 1 includes, for example, a network device 101 and a terminal 102.

It should be noted that the technical solution in the embodiments of the present disclosure may be applied to various communication systems, such as a long term evolution (LTE) system, a fifth generation (5G) mobile communication system, a 5G new radio (NR) system, or other future new mobile communication systems.

The network device 101 in an embodiment of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the network device are not limited in the embodiments of the present disclosure. The network device provided in the embodiments of the present disclosure may include a central unit (CU) and a distributed unit (DU), in which the CU may also be referred to as a control unit. The CU-DU structure may be used to split the protocol layer of the network device, such as the base station, and the functions of some protocol layers are placed in the CU for centralized control, and the functions of the remaining part or all of the protocol layers are distributed in the DU, and the DU is centrally controlled by the CU.

The terminal 102 in an embodiment of the present disclosure is an entity on the user side for receiving or transmitting signals, such as a mobile phone. The terminal may also be referred to as a terminal device, a user equipment (UE), a mobile station (MS), a mobile terminal (MT), etc. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc.

The specific technology and specific device form adopted by the terminal are not limited in the embodiments of the present disclosure.

It may be understood that the communication system described in this embodiment of the present disclosure is for the purpose of more clearly illustrating the technical solution of the embodiments of the present disclosure, and does not constitute a limitation on the technical solution provided in the embodiments of the present disclosure. Those of ordinary skill in the art may know that with the evolution of the system architecture and the emergence of new business scenarios, the technical solution provided in the embodiments of the present disclosure is also applicable to similar technical problems.

The indication method and the indication apparatus provided in the present disclosure are described in detail below in conjunction with the accompanying drawings. FIG. 2 is a schematic flowchart of an indication method provided in an embodiment of the present disclosure. The method is performed by a terminal. The indication method in this embodiment may be applied to a terminal, such as a mobile phone or a tablet with a mobile communication function, a smart watch, or the like, without limitations.

As shown in FIG. 2, the method may include, but is not limited to, the following steps.

At step S102, first indication information transmitted by a network device is received, in which the first indication information indicates a number of repetitions for a hybrid automatic repeat request acknowledgement message corresponding to a random access message.

The first indication information refers to a message transmitted by the network device to the terminal to indicate the number of repetitions for the hybrid automatic repeat request acknowledgement message corresponding to the random access message.

The random access refers to a procedure from a moment when a UE transmits a random access preamble to try to access a network to a moment when a basic signaling connection is established with the network. The random access is divided into a competitive random access and a non-competitive random access. The random access message may be a contention resolution message in the random access procedure, such as message 4 (Message.4, Msg.4), or may be message B (Message.B, Msg.B).

The HARQ-ACK message refers to an acknowledgement message transmitted by the terminal to the network device after the random access message is successfully decoded by the terminal.

At step S202, the hybrid automatic repeat request acknowledgement message is transmitted according to the first indication information.

In this embodiment, by receiving the first indication information transmitted by the network device and transmitting the hybrid automatic repeat request acknowledgement message corresponding to the random access message according to the first indication information, in which the first indication information indicates the number of repetitions for the hybrid automatic repeat request acknowledgement message, it is possible to accurately indicate the number of repetitions for the hybrid automatic repeat request acknowledgement message based on the first indication information, thereby effectively improving the coverage capability and feedback effect of the hybrid automatic repeat request acknowledgement message.

In an embodiment of the present disclosure, an indication method is also provided, in which the first indication information is a first indication field of a first signaling, and the first indication field indicates the number of repetitions for the hybrid automatic repeat request acknowledgement message. Thus, the number of repetitions may be quickly determined based on the first signaling to effectively improve the indication efficiency.

The signaling refers to messages transmitted between different links (e.g., base stations, mobile stations/terminals, mobile control switching centers, etc.) of a communication network. Each link may perform analysis and processing and form a series of operations and controls through interactions, which are used to ensure the effective and reliable transmission of user information. The first signaling refers to a signaling used to carry the first indication information.

The first indication field refers to a field in the first signaling used to indicate the number of repetitions.

In an embodiment of the present disclosure, an indication method is also provided, in which the first signaling includes at least one of: a radio resource control (RRC) signaling, or downlink control information (DCI) scheduling the random access message. Thus, it is possible to ensure the indication effect of the first signaling on the number of repetitions.

The radio resource control (RRC) refers to the management, control and scheduling of radio resources through certain strategies and means, which may make full use of limited radio network resources as much as possible, ensure that the planned coverage area is reached, and maximize service capacities and resource utilization rates, while meeting the quality of service requirements.

The downlink control information (DCI) refers to downlink control information transmitted by a base station to the UE and carried on a downlink physical control channel (PDCCH), including uplink and downlink resource allocation, HARQ information, power control, etc.

In an embodiment of the present disclosure, an indication method is also provided, in which the first indication information is at least one first indication field of the first signaling, and the number of repetitions for the hybrid automatic repeat request acknowledgement message is a value corresponding to the at least one first indication field. Thus, it is possible to ensure the reliability of the indication of the number of repetitions by the first indication information.

In an embodiment of the present disclosure, an indication method is also provided, in which the first indication information includes a first signaling and a second signaling, in which the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message. Thus, the indication contents of the first signaling and the second signaling may be effectively combined in the process of determining the number of repetitions to effectively improve the flexibility of the indication process.

The second signaling refers to a signaling used to indicate the number of repetitions, and the second signaling is not the same as the first signaling.

In an embodiment of the present disclosure, an indication method is also provided, in which the first indication information includes predefined configuration information and a second signaling, the predefined configuration information includes at least one candidate number of repetitions for the hybrid automatic repeat request acknowledgement message, the second signaling indicates a first indication field, and the first indication field indicates the number of repetitions for the hybrid automatic repeat request acknowledgement message from the at least one candidate number of repetitions for the hybrid automatic repeat request acknowledgement message. Thus, it is possible to effectively improve the control effect of the repetition number acquisition process based on the predefined candidate repetition number.

In an embodiment of the present disclosure, an indication method is also provided, in which the first signaling is an RRC signaling, and/or the second signaling is DCI scheduling the random access message. Thus, the practicality of the first signaling and the second signaling in the indication process may be effectively improved, and the indication effect may be effectively improved.

FIG. 3 is a schematic flowchart of another indication method provided in an embodiment of the present disclosure. The indication method in this embodiment may be applied to a terminal. As shown in FIG. 3, the method may include, but is not limited to, the following steps.

At step S103, a first request is transmitted to the network device, in which the first request is used to request the network device to transmit the first indication information.

The first request refers to a message used to request the network device to transmit the first indication information.

In this embodiment, by transmitting the first request to the network device, in which the first request is used to request the network device to transmit the first indication information, it is possible to provide a reliable trigger basis for the network device to transmit the first indication information, thereby effectively improving the timeliness of transmitting the first indication information by the network device.

It may be understood that this embodiment may be implemented alone or in combination with other embodiments of the present disclosure. For example, this embodiment may be exemplarily implemented in combination with the embodiment shown in FIG. 2.

FIG. 4 is a schematic flowchart of another indication method provided in an embodiment of the present disclosure. The indication method in this embodiment may be applied to a terminal. As shown in FIG. 4, the method may include, but is not limited to, the following steps.

At step S104, the first request is transmitted to the network device in case that a type of a network accessed by the terminal is a preset type.

The preset type refers to a predetermined network type suitable for transmitting the first request.

In this embodiment, by transmitting the first request to the network device when the type of the network accessed by the terminal is the preset type, the timing of transmitting the first request may be effectively controlled based on the preset type, thereby effectively improving the practicality of the indication method.

It may be understood that this embodiment may be implemented alone or in combination with other embodiments of the present disclosure. For example, this embodiment may be exemplarily implemented in combination with the embodiment shown in FIG. 2.

In an embodiment of the present disclosure, an indication method is also provided, in which the preset type at least includes a non-terrestrial network (NTN). Therefore, the indication method may be executed in time when the terminal accesses the non-terrestrial network to ensure the transmission reliability of the hybrid automatic repeat request acknowledgement message.

The non-terrestrial network (NTN) refers to a technology that uses typical satellites and high-altitude platform systems (HAPSs) to participate in network deployment.

It may be understood that when the terminal accesses the non-terrestrial network (NTN), the corresponding network device may be, for example, a satellite or other aerial devices.

For example, when the terminal determines the type of the network accessed by itself, the type of the network may be determined through a specific field in the system information block message 1 (SIB1), such as cell-barredNTN. If this field exists, it indicates that the type of the network accessed by the terminal is an NTN network. Alternatively, the type of the network accessed by the terminal may be determined by searching frequency points, or satellite ephemeris information in SIB 19 may be used to determine the type of a satellite orbit accessed, such as a low-orbit satellite, a synchronous satellite, or the like, without limitations.

In an embodiment of the present disclosure, an indication method is also provided, in which the first request is transmitted to the network device in case that a reference signal received power (RSRP) of a downlink channel or signal detected by the terminal is lower than a first threshold. Thus, a reliable trigger basis for transmitting the first request may be provided based on the first threshold, thereby ensuring that the terminal transmits the first request in a timely manner.

The downlink channel refers to a channel used to transmit signals from the network device to the terminal. The signal carried on the downlink channel may be referred to as a downlink signal.

The RSRP refers to a key parameter that can represent the strength of a radio signal in the communication network and one of the physical layer measurement requirements. The RSRP is the average power value of signals received on all resource elements (REs) carrying a reference signal in a certain symbol.

The first threshold refers to a threshold value configured for the RSRP of the downlink channel or signal.

In an embodiment of the present disclosure, an indication method is also provided, in which the first threshold is an RSRP value. Thus, it is possible to effectively improve the correlation between the first threshold and the RSRP to ensure the reliability of the comparison result between the RSRP and the first threshold.

FIG. 5 is a schematic flowchart of another indication method provided in an embodiment of the present disclosure. The indication method in this embodiment may be applied to a terminal. As shown in FIG. 5, the method may include, but is not limited to, the following steps.

At step S105, the hybrid automatic repeat request acknowledgement message is retransmitted to the network device according to the number of repetitions indicated by the first indication information

In this embodiment, by retransmitting the hybrid automatic repeat request acknowledgement message to the network device according to the number of repetitions indicated by the first indication information, the coverage effect of the hybrid automatic repeat request acknowledgement message may be ensured.

It may be understood that this embodiment may be implemented alone or in combination with other embodiments of the present disclosure. For example, this embodiment may be exemplarily implemented in combination with the embodiment shown in FIG. 2.

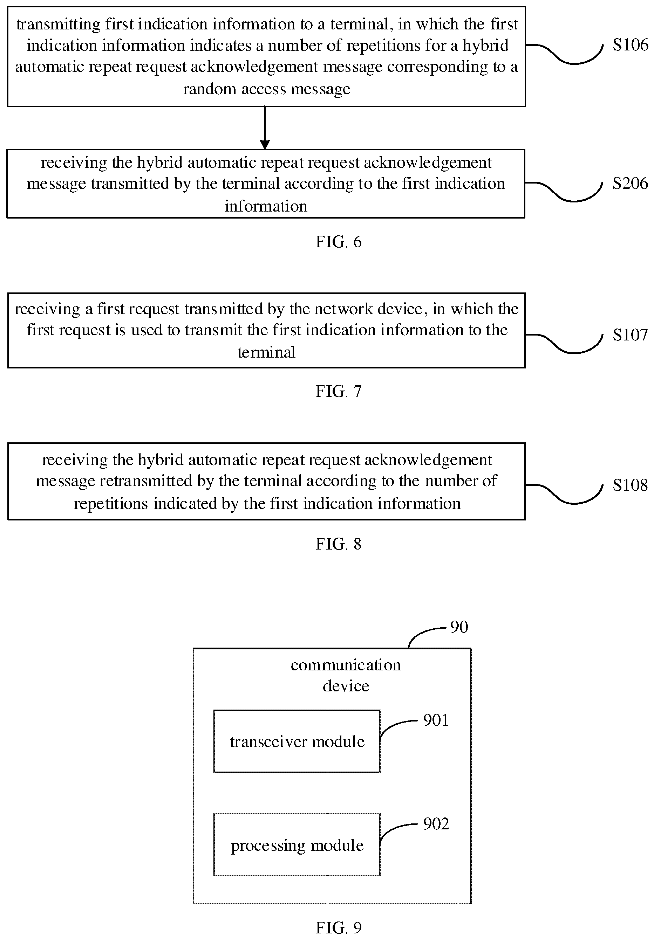

FIG. 6 is a schematic flowchart of another indication method provided in an embodiment of the present disclosure. The indication method in this embodiment may be applied to a network device. As shown in FIG. 6, the method may include, but is not limited to, the following steps.

At step S106, first indication information is transmitted to a terminal, in which the first indication information indicates a number of repetitions for a hybrid automatic repeat request acknowledgement message corresponding to a random access message.

At step S206, the hybrid automatic repeat request acknowledgement message transmitted by the terminal according to the first indication information is received.

In this embodiment, by transmitting the first indication information to the terminal and receiving the hybrid automatic repeat request acknowledgement message corresponding to the random access message transmitted by the terminal according to the first indication information, in which the first indication information indicates the number of repetitions for the hybrid automatic repeat request acknowledgement message, the network device may accurately indicate the number of repetitions for the hybrid automatic repeat request acknowledgement message corresponding to the random access message to the terminal based on the first indication information, and receive the hybrid automatic repeat request acknowledgement message transmitted by the terminal according to the first indication information, thereby effectively improving the transmission effect of the hybrid automatic repeat request acknowledgement message.

In an embodiment of the present disclosure, an indication method is also provided, in which the first indication information is a first indication field of a first signaling, and the first indication field indicates the number of repetitions for the hybrid automatic repeat request acknowledgement message. Thus, it is possible to effectively improve the indication effect of the first signaling on the number of repetitions.

In an embodiment of the present disclosure, an indication method is also provided, in which the first signaling includes at least one of: a radio resource control (RRC) signaling, or downlink control information (DCI) scheduling the random access message. Thus, the flexibility of the first signaling may be effectively improved while ensuring the indication effect of the first signaling on the number of repetitions.

In an embodiment of the present disclosure, an indication method is also provided, in which the first indication information is at least one first indication field of the first signaling, and the number of repetitions for the hybrid automatic repeat request acknowledgement message is a value corresponding to the at least one first indication field. Thus, it is possible to ensure the indication effect of the first indication information on the number of repetitions.

In an embodiment of the present disclosure, an indication method is also provided, in which the first indication information includes a first signaling and a second signaling, in which the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message. Thus, it is possible to effectively improve the flexibility and reliability of the indication of the number of repetitions based on the first signaling and the second signaling.

In an embodiment of the present disclosure, an indication method is also provided, in which the first indication information includes predefined configuration information and a second signaling, the predefined configuration information includes at least one candidate number of repetitions for the hybrid automatic repeat request acknowledgement message, the second signaling indicates a first indication field, and the first indication field indicates the number of repetitions for the hybrid automatic repeat request acknowledgement message from the at least one candidate number of repetitions for the hybrid automatic repeat request acknowledgement message. Thus, it is possible to provide reliable reference information for determining the number of repetitions based on the predefined configuration information.

In an embodiment of the present disclosure, an indication method is also provided, in which the first signaling is an RRC signaling, and/or the second signaling is DCI scheduling the random access message. Thus, the practicality of the first signaling and the second signaling in the indication process may be effectively improved.

FIG. 7 is a schematic flowchart of another indication method provided in an embodiment of the present disclosure. The indication method in this embodiment may be applied to a network device. As shown in FIG. 7, the method may include, but is not limited to, the following steps.

At step S107, a first request transmitted by the network device is received, in which the first request is used to transmit the first indication information to the terminal.

In this embodiment, by receiving the first request transmitted by the network device, in which the first request is used to transmit the first indication information to the terminal, it is possible to quickly transmit the first indication information to the terminal based on the received first request, thereby effectively improving the timeliness of transmitting the first indication information.

It may be understood that this embodiment may be implemented alone or in combination with other embodiments of the present disclosure. For example, this embodiment may be exemplarily implemented in combination with the embodiment shown in FIG. 6.

FIG. 8 is a schematic flowchart of another indication method provided in an embodiment of the present disclosure. The indication method in this embodiment may be applied to a network device. As shown in FIG. 8, the method may include, but is not limited to, the following steps.

At step S108, the hybrid automatic repeat request acknowledgement message retransmitted by the terminal according to the number of repetitions indicated by the first indication information is received.

In this embodiment, by receiving the hybrid automatic repeat request acknowledgement message retransmitted by the terminal according to the number of repetitions indicated by the first indication information, the reception effect of the hybrid automatic repeat request acknowledgement message by the network device may be effectively improved.

It may be understood that this embodiment may be implemented alone or in combination with other embodiments of the present disclosure. For example, this embodiment may be exemplarily implemented in combination with the embodiment shown in FIG. 6.

For example, the above-mentioned indication methods may be illustrated as follows.
1. The number of repetitions for the hybrid automatic repeat request acknowledgement message corresponding to the random access message (Msg.4) is indicate by a signaling.
2. The number of repetitions for the hybrid automatic repeat request acknowledgement message is determined by one or more signalings.
3. In response to a specified condition, the above steps are executed, in which the specified condition may include transmitting demand indication information by the terminal to the network device.

The terminal may transmit the demand indication information when the type of the network accessed is a preset type. The preset type includes one or more of a non-terrestrial network, a measured RSRP being lower than a threshold, a power type being a non-high-power user, and the like. Certainly, the preset type may also be other types.

The demand indication information may be, for example, specific PRACH information or MAC information included in Msg.3.

When the number of repetitions for the hybrid automatic repeat request acknowledgement message is determined by one signaling, any of the following situations may apply.

The number of repetitions is determined based on the above-mentioned first signaling. A field indicating the number of repetitions in a specific RRC information element (IE) is added to the first signaling. This field is used to configure a value of the number of repetitions. For example, the RRC IE may be PUCCH config common, RACH config common, etc. Certainly, the existing RRC IE may also be directly reused. This is not specifically limited in the present disclosure.

A field to configure the number of repetitions in the DCI (DCI Msg.4) used to schedule Msg.4 is added to the first signaling, and the value represented by this field is directly used to indicate the number of repetitions. For example, the newly added field is NofHARQRep, which has 4 bits, so the value of this field can represent the number of repetitions from 1 to 16. Certainly, the existing fields in the DCI may also be directly reused. This is not specifically limited in the present disclosure.

The first signaling is implicitly indicated by an existing field in DCI Msg.4. When one or more existing specific fields in DCI Msg.4 are set to special values, the number of repetitions is considered to be X, where X is a predefined value. Alternatively, the value of an existing specific field in DCI Msg.4 may be used to indicate the number of repetitions, for example, using upper Y bits indicating the mission critical service (MCS) to indicate the number of repetitions, such as Y=2, then the values of upper two bits of the MCS field in the DCI scheduling Msg.4 indicate the number of repetitions.

When the number of repetitions for the hybrid automatic repeat request acknowledgement message is determined by multiple signalings, any of the following situations may apply.

Method 1): A set of values is explicitly configured by a first signaling, and a value in the set of values is explicitly indicated by a second signaling, for example, the first signaling is RRC RACH config common, and the second signaling is DCI msg.4.

For example, if the first signaling configures 4 types of repetition number {1, 2, 4, 8}, then 2 bits of a specific field are used in DCI Msg.4 to correspond to 4 different values. When the value indicated by the specific field is 4, it means that the number of repetitions is 8.

Method 2): A set of values is explicitly configured by a first signaling, and a value in the set of values is implicitly indicated by a second signaling. For example, the first signaling is RRC RACH config common, and the second signaling is DCI msg.4. The existing field is retranslated, such as upper X indication bits of the MCS field. For example, the first signaling configures 4 types of repetition number {1, 2, 4, 8}, then 2 bits of an existing field (the upper two bits of the MCS field) in DCI Msg.4 correspond to 4 different values. When the value indicated by the upper two bits of the MCS field is 4, it means that the number of repetitions is 8.

Method 3): A set of values is predefined, and a value in the set of values may be implicitly indicated by a second signaling. For example, the second signaling is DCI msg.4, and the number of repetitions is indicated by retranslating a specific field of DCI Msg.4 or an existing field (such as the MCS field). For example, if the predefined values are {1, 2, 8, 16}, and the values indicated by the upper two bits of the MCS field are 4, then the number of repetitions is 16.

For example, the first signaling configures the number of repetitions by defining a new parameter NumofMsg4HARQ-repetition. When this parameter is present, the upper two bits of the MCS field in DCI Msg.4 correspond to one of the four values of the new parameter NumofMsg4HARQ-repetition. When this parameter is not present, the upper two bits of the MCS field in DCI Msg.4 correspond to one of the predefined values {1,2,3,4}.

Method 4): The method 4) is a combination of the method 2) and method 3) mentioned above. When the first signaling exists, method 2) is adopted. When the first signaling does not exist, method 3) is adopted.

Certainly, method 4) can also be a combination of the other methods mentioned above. This is not specifically limited in the embodiments of the present disclosure.

FIG. 9 is a schematic block diagram of a communication device 90 provided in an embodiment of the present disclosure. The communication device 90 shown in FIG. 9 may include a transceiver module 901 and a processing module 902. The transceiver module 901 may include a transmitting module and/or a receiving module. The transmitting module is configured to implement a transmitting function, and the receiving module is configured to implement a receiving function. The transceiver module 901 may implement a transmitting function and/or a receiving function.

The communication device 90 may be a terminal (e.g., the terminal in the aforementioned method embodiments), or an apparatus in a terminal, or an apparatus that may be used in conjunction with a terminal. Alternatively, the communication device 90 may be a network device (e.g., the network device in the aforementioned method embodiments), or an apparatus in a network device, or an apparatus that may be used in conjunction with a network device.

The communication device 90, at a terminal side, includes a transceiver module 901 configured to receive first indication information transmitted by a network device, in which the first indication information indicates a number of repetitions for a hybrid automatic repeat request acknowledgement message corresponding to a random access message.

Optionally, the transceiver module 901 is further configured to transmit the hybrid automatic repeat request acknowledgement message according to the first indication information.

Optionally, the first indication information is a first indication field of a first signaling, and the first indication field indicates the number of repetitions for the hybrid automatic repeat request acknowledgement message.

Optionally, the first signaling includes at least one of: a radio resource control (RRC) signaling, or downlink control information (DCI) scheduling the random access message.

Optionally, the first indication information is at least one first indication field of the first signaling, and the number of repetitions for the hybrid automatic repeat request acknowledgement message is a value corresponding to the at least one first indication field.

Optionally, the first indication information includes a first signaling and a second signaling, in which the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message.

Optionally, the first indication information includes predefined configuration information and a second signaling, the predefined configuration information includes at least one candidate number of repetitions for the hybrid automatic repeat request acknowledgement message, and the second signaling indicates a first indication field, and the first indication field indicates the number of repetitions for the hybrid automatic repeat request acknowledgement message from the at least one candidate number of repetitions for the hybrid automatic repeat request acknowledgement message.

Optionally, the first signaling is an RRC signaling, and/or the second signaling is DCI scheduling the random access message.

Optionally, the transceiver module 901 is further configured to transmit a first request to the network device, in which the first request is used to request the network device to transmit the first indication information.

Optionally, the transceiver module 901 is further configured to transmit the first request to the network device in case that a type of a network accessed by the terminal is a preset type.

Optionally, the preset type at least includes a non-terrestrial network (NTN).

Optionally, the transceiver module 901 is further configured to transmit the first request to the network device in case that a reference signal received power (RSRP) of a downlink channel or signal detected by the terminal is lower than a first threshold.

Optionally, the first threshold is an RSRP value.

Optionally, the transceiver module 901 is further configured to retransmit the hybrid automatic repeat request acknowledgement message to the network device according to the number of repetitions indicated by the first indication information.

By implementing the method in the present disclosure, the terminal may receive the first indication information transmitted by the network device and transmit the hybrid automatic repeat request acknowledgement message corresponding to the random access message according to the first indication information, in which the first indication information indicates the number of repetitions for the hybrid automatic repeat request acknowledgement message. Thus, it is possible to accurately indicate the number of repetitions for the hybrid automatic repeat request acknowledgement message based on the first indication information, thereby effectively improving the coverage capability and feedback effect of the hybrid automatic repeat request acknowledgement message.

The communication device 90, at a network device side, includes a transceiver module 901 configured to transmit first indication information to a terminal, in which the first indication information indicates a number of repetitions for a hybrid automatic repeat request acknowledgement message corresponding to a random access message.

Optionally, the transceiver module 901 is further configured to receive the hybrid automatic repeat request acknowledgement message transmitted by the terminal according to the first indication information.

Optionally, the first indication information is a first indication field of a first signaling, and the first indication field indicates the number of repetitions for the hybrid automatic repeat request acknowledgement message.

Optionally, the first signaling includes at least one of: a radio resource control (RRC) signaling, or downlink control information (DCI) scheduling the random access message.

Optionally, the first indication information is at least one first indication field of the first signaling, and the number of repetitions for the hybrid automatic repeat request acknowledgement message is a value corresponding to the at least one first indication field.

Optionally, the first indication information includes a first signaling and a second signaling, in which the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message.

Optionally, the first indication information includes predefined configuration information and a second signaling, the predefined configuration information includes at least one candidate number of repetitions for the hybrid automatic repeat request acknowledgement message, and the second signaling indicates a first indication field, and the first indication field indicates the number of repetitions for the hybrid automatic repeat request acknowledgement message from the at least one candidate number of repetitions for the hybrid automatic repeat request acknowledgement message.

Optionally, the first signaling is an RRC signaling, and/or the second signaling is DCI scheduling the random access message.

Optionally, the transceiver module 901 is further configured to receive a first request transmitted by the network device, in which the first request is used to transmit the first indication information to the terminal.

Optionally, the transceiver module 901 is further configured to receive the hybrid automatic repeat request acknowledgement message retransmitted by the terminal according to the number of repetitions indicated by the first indication information.

By implementing the method in the present disclosure, the network device may transmit the first indication information to the terminal and receive the hybrid automatic repeat request acknowledgement message corresponding to the random access message transmitted by the terminal according to the first indication information, in which the first indication information indicates the number of repetitions for the hybrid automatic repeat request acknowledgement message. Thus, the network device may accurately indicate the number of repetitions for the hybrid automatic repeat request acknowledgement message corresponding to the random access message to the terminal based on the first indication information, and receive the hybrid automatic repeat request acknowledgement message transmitted by the terminal according to the first indication information, thereby effectively improving the transmission effect of the hybrid automatic repeat request acknowledgement message.

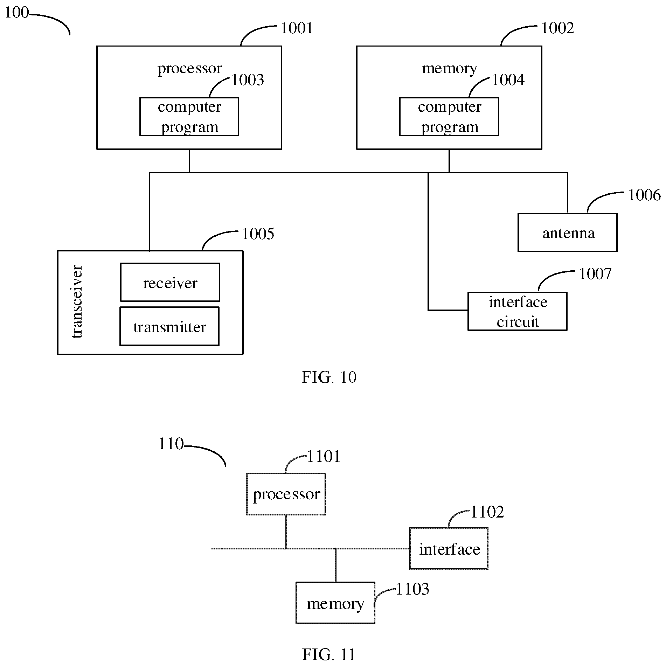

FIG. 10 is a schematic block diagram of another communication device 100 provided in an embodiment of the present disclosure. The communication device 100 may be a network device (e.g., the network device in the aforementioned method embodiments), or may be a terminal (e.g., the terminal in the aforementioned method embodiments), or may be a chip, a chip system, or a processor supporting the network device to implement the above-mentioned methods, or may be a chip, a chip system or a processor supporting the terminal to implement the above-mentioned methods. The communication device 100 may be configured to implement the methods as described in the above-mentioned method embodiments. For details, reference may be made to the description in the above-mentioned method embodiments.

The communication device 100 may include one or more processors 1001. The processor 1001 may be a general-purpose processor, a special-purpose processor, or the like. The processor 1001 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a computer program, and process data of the computer program.

Optionally, the communication device 100 may further include one or more memories 1002 on which a computer program 1004 may be stored, and the processor 1001 has stored therein a computer program 1003 and is configured to execute the computer program 1004 and/or the computer program 1003 to cause the communication device 100 to perform the methods as described in the above-mentioned method embodiments. Optionally, the memory 1002 may also have data stored therein. The communication device 100 and the memory 1002 may be provided independently or integrated together.

Optionally, the communication device 100 may further include a transceiver 1005 and an antenna 1006. The transceiver 1005 may be referred to as a transceiving unit, a transceiving device, a transceiving circuit or the like for implementing a transceiving function. The transceiver 1005 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 100 may further include one or more interface circuits 1007. The interface circuit 1007 is configured to receive and transmit code instructions to the processor 1001. The processor 1001 is configured to run the code instructions to enable the communication device 100 to perform the methods described in the above-mentioned method embodiments.

In an implementation, the processor 1001 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1001 may have stored therein the computer program 1003 that, when running on the processor 1001, enables the communication device 100 to perform the methods described in the above-mentioned method embodiments. The computer program 1003 may be embedded in the processor 1001, in which case the processor 1001 may be implemented by hardware.

In an implementation, the communication device 100 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device (e.g., the network device in the aforementioned method embodiments) or a terminal (e.g., the terminal in the aforementioned method embodiments), but the scope of the communication device described in the present disclosure is not limited thereto. The structure of the communication device may not be limited by FIG. 10. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, etc.; (6) others.

For the case where the communication device may be a chip or a chip system, reference may be made to the schematic block diagram of the chip 110 shown in FIG. 11. The chip 110 shown in FIG. 11 includes a processor 1101 and an interface 1102. The number of processors 1101 may be one or more, and the number of interfaces 1102 may be multiple.

For the case where the chip is configured to implement the functions of the terminal in embodiments of the present disclosure, the processor 1101 is configured to implement steps S102 and S202 in FIG. 2, or to implement step S103 in FIG. 3, or to implement step S104 in FIG. 4, or the like.

For the case where the chip is configured to implement the functions of the network device in embodiments of the present disclosure, the interface 1102 is configured to implement steps S106 and S206 in FIG. 6, or to implement step S107 in FIG. 7.

Optionally, the chip further includes a memory 1103 for storing desired computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

An embodiment of the present disclosure further provides a communication system. The communication system includes the communication device as the network device (e.g., the network device in the aforementioned method embodiments) and the communication device as the terminal (e.g., the terminal in the aforementioned method embodiments) in the above-mentioned embodiments shown in FIG. 9. Alternatively, the communication system includes the communication device as the network device (e.g., the network device in the aforementioned method embodiments) and the communication device as the terminal (e.g., the terminal in the aforementioned method embodiments) in the above-mentioned embodiments shown in FIG. 10.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C", "D", etc., and these technical features described with the terms "first", "second", "third", "A", "B", "C" and "D" have no order of precedence or size.

The corresponding relationships shown in the tables in the present disclosure may be configured or predefined. The values of the information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above is only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. An indication method, performed by a terminal and comprising:
receiving (S102) first indication information transmitted by a network device, wherein the first indication information indicates a number of repetitions for a hybrid automatic repeat request acknowledgement message corresponding to a random access message, wherein the random access message is message 4, Msg.4, the first indication information comprises a first signaling and a second signaling, wherein the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message;
transmitting (S202) the hybrid automatic repeat request acknowledgement message with repetitions according to the first indication information.

2. The method according to claim 1, wherein the first signaling comprises a first indication field, and the number of repetitions for the hybrid automatic repeat request acknowledgement message is a value corresponding to the first indication field.

3. The method according to claim 2, wherein the first signaling is a radio resource control, RRC, signaling, and/or the second signaling is downlink control information, DCI, scheduling the random access message.

4. The method according to any one of claims 1 to 3, further comprising:
transmitting (S103) a first request to the network device, wherein the first request is used to request the network device to transmit the first indication information.

5. The method according to claim 4, wherein transmitting (S103) the first request to the network device comprises:
transmitting the first request to the network device in case that a reference signal received power, RSRP, of a downlink channel or signal detected by the terminal is lower than a first threshold.

6. The method according to any one of claims 1 to 5, wherein the hybrid automatic repeat request acknowledgement message is an acknowledgement message transmitted by the terminal to the network device after the random access message is successfully decoded by the terminal.

7. An indication method, performed by a network device and comprising:
transmitting (S106) first indication information to a terminal, wherein the first indication information indicates a number of repetitions for a hybrid automatic repeat request acknowledgement message corresponding to a random access message, wherein the random access message is message 4, Msg.4, the first indication information comprises a first signaling and a second signaling, wherein the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message;
receiving (S206) the hybrid automatic repeat request acknowledgement message with repetitions transmitted by the terminal according to the first indication information.

8. The method according to claim 7, wherein the first signaling comprises a first indication field. and the number of repetitions for the hybrid automatic repeat request acknowledgement message is a value corresponding to the first indication field.

9. The method according to claim 8, wherein the first signaling is a radio resource control, RRC, signaling, and/or the second signaling is downlink control information, DCI, scheduling the random access message.

10. The method according to any one of claims 7 to 9, further comprising:
receiving (S107) a first request transmitted by the network device, wherein the first request is used to transmit the first indication information to the terminal.

11. The method according to claim 10, wherein receiving (S107) the first request transmitted by the network device comprises:
receiving the first request transmitted by the network device in case that a reference signal received power, RSRP, of a downlink channel or signal detected by the terminal is lower than a first threshold.

12. A communication device (90), comprising:
a transceiver module (901) configured to receive first indication information transmitted by a network device, and transmit a hybrid automatic repeat request acknowledgement message corresponding to a random access message according to the first indication information, wherein the first indication information indicates a number of repetitions for the hybrid automatic repeat request acknowledgement message corresponding to a random access message, wherein the random access message is message 4, Msg.4, the first indication information comprises a first signaling and a second signaling, wherein the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message.

13. A communication device (90), comprising:
a transceiver module (901) configured to transmit first indication information to a terminal, and receive a hybrid automatic repeat request acknowledgement message corresponding to a random access message transmitted by the terminal according to the first indication information, wherein the first indication information indicates a number of repetitions for the hybrid automatic repeat request acknowledgement message corresponding to a random access message, wherein the random access message is message 4, Msg.4, the first indication information comprises a first signaling and a second signaling, wherein the first signaling indicates at least one candidate number of repetitions for the hybrid automatic repeat request acknowledgement message, and the second signaling indicates the number of repetitions for the hybrid automatic repeat request acknowledgement message from the at least one candidate number of repetitions for the hybrid automatic repeat request acknowledgement message.

14. A communication system, comprising:
a terminal configured to perform the method according to any one of claims 1 to 6; and
a network device configured to perform the method according to any one of claims 7 to 11.

15. A computer-readable storage medium for storing instructions that, when executed, cause the method according to any one of claims 1 to 6 or any one of claims 7 to 11 to be implemented.

## Patentansprüche

1. Ein Anzeigeverfahren, das durch ein Endgerät durchgeführt wird und folgende Schritte aufweist:
Empfangen (S102) erster Anzeigeinformationen, die durch eine Netzwerkvorrichtung gesendet werden, wobei die ersten Anzeigeinformationen eine Anzahl von Wiederholungen für eine hybride automatische Wiederholungsanfragebestätigungsnachricht anzeigen, die einer Direktzugriffsnachricht entspricht, wobei die Direktzugriffsnachricht eine Message 4, Msg.4, ist, wobei die ersten Anzeigeinformationen eine erste Signalisierung und eine zweite Signalisierung aufweisen, wobei die erste Signalisierung zumindest eine in Frage kommende Anzahl von Wiederholungen für die hybride automatische Wiederholungsanfragebestätigungsnachricht anzeigt und die zweite Signalisierung die Anzahl von Wiederholungen für die hybride automatische Wiederholungsanfragebestätigungsnachricht aus der zumindest einen in Frage kommenden Anzahl von Wiederholungen für die hybride automatische Wiederholungsanfragebestätigungsnachricht anzeigt;
Senden (S202) der hybriden automatischen Wiederholungsanfragebestätigungsnachricht mit Wiederholungen gemäß den ersten Anzeigeinformationen.

2. Das Verfahren gemäß Anspruch 1, wobei
die erste Signalisierung ein erstes Anzeigefeld aufweist und die Anzahl von Wiederholungen für die hybride automatische Wiederholungsanfragebestätigungsnachricht ein Wert ist, der dem ersten Anzeigefeld entspricht.

3. Das Verfahren gemäß Anspruch 2, wobei die erste Signalisierung eine Funkressourcensteuerungs-, RRC-, Signalisierung ist und/oder die zweite Signalisierung eine Downlink-Steuerungsinformation, DCI, ist, welche die Direktzugriffsnachricht plant.

4. Das Verfahren gemäß einem der Ansprüche 1 bis 3, das ferner folgenden Schritt aufweist:
Senden (S103) einer ersten Anfrage an die Netzwerkvorrichtung, wobei die erste Anfrage dazu verwendet wird, die Netzwerkvorrichtung aufzufordern, die ersten Anzeigeinformationen zu senden.

5. Das Verfahren gemäß Anspruch 4, wobei das Senden (S103) der ersten Anfrage an die Netzwerkvorrichtung folgenden Schritt aufweist:
Senden der ersten Anfrage an die Netzwerkvorrichtung, falls eine durch das Endgerät detektierte Referenzsignal-Empfangsleistung, RSRP, eines Downlink-Kanals oder -Signals geringer als ein erster Schwellenwert ist.

6. Das Verfahren gemäß einem der Ansprüche 1 bis 5, wobei die hybride automatische Wiederholungsanfragebestätigungsnachricht eine Bestätigungsnachricht ist, die von dem Endgerät an die Netzwerkvorrichtung gesendet wird, nachdem die Direktzugriffsnachricht von dem Endgerät erfolgreich decodiert wurde.

7. Ein Anzeigeverfahren, das durch ein Netzwerkvorrichtung durchgeführt wird und folgende Schritte aufweist:
Empfangen (S106) erster Anzeigeinformationen an ein Endgerät, wobei die ersten Anzeigeinformationen eine Anzahl von Wiederholungen für eine hybride automatische Wiederholungsanfragebestätigungsnachricht anzeigen, die einer Direktzugriffsnachricht entspricht, wobei die Direktzugriffsnachricht eine Message 4, Msg.4, ist, wobei die ersten Anzeigeinformationen eine erste Signalisierung und eine zweite Signalisierung aufweisen, wobei die erste Signalisierung zumindest eine in Frage kommende Anzahl von Wiederholungen für die hybride automatische Wiederholungsanfragebestätigungsnachricht anzeigt und die zweite Signalisierung die Anzahl von Wiederholungen für die hybride automatische Wiederholungsanfragebestätigungsnachricht aus der zumindest einen in Frage kommenden Anzahl von Wiederholungen für die hybride automatische Wiederholungsanfragebestätigungsnachricht anzeigt;
Empfangen (S206) der hybriden automatischen Wiederholungsanfragebestätigungsnachricht mit Wiederholungen, die durch das Endgerät gemäß den ersten Anzeigeinformationen gesendet wird.

8. Das Verfahren gemäß Anspruch 7, wobei
die erste Signalisierung ein erstes Anzeigefeld aufweist und die Anzahl von Wiederholungen für die hybride automatische Wiederholungsanfragebestätigungsnachricht ein Wert ist, der dem ersten Anzeigefeld entspricht.

9. Das Verfahren gemäß Anspruch 8, wobei die erste Signalisierung eine Funkressourcensteuerungs-, RRC-, Signalisierung ist und/oder die zweite Signalisierung eine Downlink-Steuerungsinformation, DCI, ist, welche die Direktzugriffsnachricht plant.

10. Das Verfahren gemäß einem der Ansprüche 7 bis 9, das ferner folgenden Schritt aufweist:
Empfangen (S107) einer ersten Anfrage, die durch die Netzwerkvorrichtung gesendet wird, wobei die erste Anfrage dazu verwendet wird, die ersten Anzeigeinformationen an das Endgerät zu senden.

11. Das Verfahren gemäß Anspruch 10, wobei das Empfangen (S107) der ersten Anfrage, die durch die Netzwerkvorrichtung gesendet wird, folgenden Schritt aufweist:
Empfangen der ersten Anfrage, die durch die Netzwerkvorrichtung gesendet wird, falls eine durch das Endgerät detektierte Referenzsignal-Empfangsleistung, RSRP, eines Downlink-Kanals oder -Signals geringer als ein erster Schwellenwert ist.

12. Eine Kommunikationsvorrichtung (90), die folgendes Merkmal aufweist:
ein Sende-Empfangs-Modul (901), das dazu konfiguriert ist, erste Anzeigeinformationen zu empfangen, die durch eine Netzwerkvorrichtung gesendet werden, und eine hybride automatische Wiederholungsanfragebestätigungsnachricht, die einer Direktzugriffsnachricht entspricht, gemäß den ersten Anzeigeinformationen zu senden, wobei die ersten Anzeigeinformationen eine Anzahl von Wiederholungen für die hybride automatische Wiederholungsanfragebestätigungsnachricht anzeigen, die einer Direktzugriffsnachricht entspricht, wobei die Direktzugriffsnachricht eine Message 4, Msg.4, ist, wobei die ersten Anzeigeinformationen eine erste Signalisierung und eine zweite Signalisierung aufweisen, wobei die erste Signalisierung zumindest eine in Frage kommende Anzahl von Wiederholungen für die hybride automatische Wiederholungsanfragebestätigungsnachricht anzeigt und die zweite Signalisierung die Anzahl von Wiederholungen für die hybride automatische Wiederholungsanfragebestätigungsnachricht aus der zumindest einen in Frage kommenden Anzahl von Wiederholungen für die hybride automatische Wiederholungsanfragebestätigungsnachricht anzeigt.

13. Eine Kommunikationsvorrichtung (90), die folgendes Merkmal aufweist:
ein Sende-Empfangs-Modul (901), das dazu konfiguriert ist, erste Anzeigeinformationen an ein Endgerät zu senden und eine hybride automatische Wiederholungsanfragebestätigungsnachricht zu empfangen, die einer Direktzugriffsnachricht entspricht, die durch das Endgerät gemäß den ersten Anzeigeinformationen gesendet wird, wobei die ersten Anzeigeinformationen eine Anzahl von Wiederholungen für die hybride automatische Wiederholungsanfragebestätigungsnachricht anzeigen, die einer Direktzugriffsnachricht entspricht, wobei die Direktzugriffsnachricht eine Message 4, Msg.4, ist, wobei die ersten Anzeigeinformationen eine erste Signalisierung und eine zweite Signalisierung aufweisen, wobei die erste Signalisierung zumindest eine in Frage kommende Anzahl von Wiederholungen für die hybride automatische Wiederholungsanfragebestätigungsnachricht anzeigt und die zweite Signalisierung die Anzahl von Wiederholungen für die hybride automatische Wiederholungsanfragebestätigungsnachricht aus der zumindest einen in Frage kommenden Anzahl von Wiederholungen für die hybride automatische Wiederholungsanfragebestätigungsnachricht anzeigt.

14. Ein Kommunikationssystem, das folgende Merkmale aufweist:
ein Endgerät, das dazu konfiguriert ist, das Verfahren gemäß einem der Ansprüche 1 bis 6 durchzuführen; und
eine Netzwerkvorrichtung, die dazu konfiguriert ist, das Verfahren gemäß einem der Ansprüche 7 bis 11 durchzuführen.

15. Ein computerlesbares Speichermedium zum Speichern von Anweisungen, die bei Ausführung bewirken, dass das Verfahren gemäß einem der Ansprüche 1 bis 6 oder einem der Ansprüche 7 bis 11 implementiert wird.

## Revendications

1. Procédé d'indication, mis en œuvre par un terminal et comprenant :
la réception (S102) d'une première information d'indication transmise par un dispositif réseau, dans lequel la première information d'indication indique un nombre de répétitions pour un message d'accusé de réception de demande de répétition automatique hybride correspondant à un message d'accès aléatoire, dans lequel le message d'accès aléatoire est le message 4, Msg.4, la première information d'indication comprenant une première signalisation et une deuxième signalisation, dans lequel la première signalisation indique au moins un nombre candidat de répétitions pour le message d'accusé de réception de demande de répétition automatique hybride, et la deuxième signalisation indique le nombre de répétitions pour le message d'accusé de réception de demande de répétition automatique hybride parmi l'au moins un nombre candidat de répétitions pour le message d'accusé de réception de demande de répétition automatique hybride ;
la transmission (S202) du message d'accusé de réception de demande de répétition automatique hybride avec des répétitions selon la première information d'indication.

2. Procédé selon la revendication 1, dans lequel
la première signalisation comprend un premier champ d'indication, et le nombre de répétitions du message d'accusé de réception de demande de répétition automatique hybride est une valeur correspondant au premier champ d'indication.

3. Procédé selon la revendication 2, dans lequel la première signalisation est une signalisation de commande des ressources radio, RRC, et/ou la deuxième signalisation est une information de commande de liaison descendante, DCI, programmant le message d'accès aléatoire.

4. Procédé selon l'une des revendications 1 à 3, comprenant en outre :
la transmission (S103) d'une première demande au dispositif réseau, dans lequel la première demande est utilisée pour demander au dispositif réseau de transmettre la première information d'indication.

5. Procédé selon la revendication 4, dans lequel la transmission (S103) de la première demande au dispositif réseau comprend :
la transmission de la première demande au dispositif réseau dans le cas où une puissance du signal de référence reçu, RSRP, d'un canal ou d'un signal de liaison descendante détectée par le terminal serait inférieure à un premier seuil.

6. Procédé selon l'une quelconque des revendications 1 à 5, dans lequel le message d'accusé de réception de demande de répétition automatique hybride est un message d'accusé de réception transmis par le terminal au dispositif réseau après que le message d'accès aléatoire ait été décodé avec succès par le terminal.

7. Procédé d'indication, mis en œuvre par un dispositif réseau et comprenant :
la transmission (S106) d'une première information d'indication à un terminal, dans lequel la première information d'indication indique un nombre de répétitions pour un message d'accusé de réception de demande de répétition automatique hybride correspondant à un message d'accès aléatoire, dans lequel le message d'accès aléatoire est le message 4, Msg.4, la première information d'indication comprenant une première signalisation et une deuxième signalisation, dans lequel la première signalisation indique au moins un nombre candidat de répétitions pour le message d'accusé de réception de demande de répétition automatique hybride, et la deuxième signalisation indique le nombre de répétitions pour le message d'accusé de réception de demande de répétition automatique hybride parmi l'au moins un nombre candidat de répétitions pour le message d'accusé de réception de demande de répétition automatique hybride ;
la réception (S206) du message d'accusé de réception de demande de répétition automatique hybride avec des répétitions transmis par le terminal selon la première information d'indication.

8. Procédé selon la revendication 7, dans lequel
la première signalisation comprend un premier champ d'indication, et le nombre de répétitions du message d'accusé de réception de demande de répétition automatique hybride est une valeur associée au premier champ d'indication.

9. Procédé selon la revendication 8, dans lequel la première signalisation est une signalisation de commande des ressources radio, RRC, et/ou la deuxième signalisation est une information de commande de liaison descendante, DCI, programmant le message d'accès aléatoire.

10. Procédé selon l'une quelconque des revendications 7 à 9, comprenant en outre :
la réception (S107) d'une première demande transmise par le dispositif réseau, dans lequel la première demande est utilisée pour transmettre la première information d'indication au terminal.

11. Procédé selon la revendication 10, dans lequel la réception (S107) de la première demande transmise par le dispositif réseau comprend :
la réception de la première demande transmise par le dispositif réseau dans le cas où une puissance du signal de référence reçu, RSRP, d'un canal ou d'un signal de liaison descendante détectée par le terminal serait inférieure à un premier seuil.

12. Dispositif de communication (90), comprenant :
un module émetteur-récepteur (901) configuré pour recevoir une première information d'indication transmise par un dispositif réseau, et pour transmettre un message d'accusé de réception de demande de répétition automatique hybride correspondant à un message d'accès aléatoire selon la première information d'indication, dans lequel la première information d'indication indique un nombre de répétitions pour le message d'accusé de réception de demande de répétition automatique hybride correspondant à un message d'accès aléatoire, dans lequel le message d'accès aléatoire est le message 4, Msg.4, la première information d'indication comprenant une première signalisation et une deuxième signalisation, dans lequel la première signalisation indique au moins un nombre candidat de répétitions pour le message d'accusé de réception de demande de répétition automatique hybride, et la deuxième signalisation indique le nombre de répétitions pour le message d'accusé de réception de demande de répétition automatique hybride parmi l'au moins un nombre candidat de répétitions pour le message d'accusé de réception de demande de répétition automatique hybride.

13. Dispositif de communication (90), comprenant :
un module émetteur-récepteur (901) configuré pour transmettre une première information d'indication à un terminal, et pour recevoir un message d'accusé de réception de demande de répétition automatique hybride correspondant à un message d'accès aléatoire transmis par le terminal selon la première information d'indication, dans lequel la première information d'indication indique un nombre de répétitions pour le message d'accusé de réception de demande de répétition automatique hybride correspondant à un message d'accès aléatoire, le message d'accès aléatoire est le message 4, Msg.4, dans lequel la première information d'indication comprend une première signalisation et une deuxième signalisation, dans lequel la première signalisation indique au moins un nombre candidat de répétitions pour le message d'accusé de réception de demande de répétition automatique hybride, et la deuxième signalisation indique le nombre de répétitions pour le message d'accusé de réception de demande de répétition automatique hybride parmi l'au moins un nombre candidat de répétitions pour le message d'accusé de réception de demande de répétition automatique hybride.

14. Système de communication, comprenant :
un terminal configuré pour mettre en œuvre le procédé selon l'une quelconque des revendications 1 à 6 ; et
un dispositif réseau configuré pour mettre en œuvre le procédé selon l'une quelconque des revendications 7 à 11.

15. Support de stockage lisible par ordinateur destiné à stocker des instructions qui, lorsqu'elles sont exécutées, entraînent la mise en œuvre du procédé selon l'une quelconque des revendications 1 à 6 ou selon l'une quelconque des revendications 7 à 11.
